# EUROPÄISCHE PATENTSCHRIFT

(11) **EP 2 072 828 B1**
(45) Veröffentlichungstag und Bekanntmachung des Hinweises auf die Patenterteilung: **28.03.2018**
(21) Anmeldenummer: 07024385.2
(22) Anmeldetag: 17.12.2007
(51) Int. Cl.: F04D 13/06, F04D 29/58

(54) **Nasslaufkreiselpumpe**
Wet-running centrifugal pump
Pompe avec moteur électrique à rotor noyé

(43) Veröffentlichungstag der Anmeldung: 24.06.2009
(73) Patentinhaber: Grundfos Management A/S, 8850 Bjerringbro (DK)
(72) Erfinder: Høj, Finn Mathiesen, 8200 Århus N (DK)
(74) Vertreter: Vollmann, Heiko

(56) Entgegenhaltungen:
- EP-A- 1 635 069
- DE-A1- 10 246 349

## Beschreibung

Die Erfindung betrifft eine Nasslaufkreiselpumpe mit den im Oberbegriff des Anspruchs 1 angegebenen Merkmalen.

Nasslaufkreiselpumpen dieser Art sind beispielsweise in Form von Heizungsumwälzpumpen bekannt. Sie weisen ein flüssigkeitsführendes Pumpengehäuse auf. Angetrieben wird die Pumpe von einem Spaltrohrmotor mit einem Stator, in dem ein Spaltrohr angeordnet ist, welches flüssigkeitsgefüllt ist, und in dem ein mit dem Stator magnetisch zusammen wirkender Rotor läuft, der eine Welle antreibt, auf der das Laufrad der Pumpe sitzt. Weiterhin ist eine Motorelektronik vorgesehen, die in einfachster Form als Motorschutzschalter oder in Form von elektronischen Schaltern zum Zu- bzw. Abschalten von Wicklungsteilen des Stators oder als Frequenzumrichters zur Drehzahlsteuerung der Pumpe einschließlich der dann typischerweise zugehörigen Regelung ausgebildet ist. Derartige Nasslaufkreiselpumpen sind insbesondere als Heizungsumwälzpumpen, Zirkulationspumpen und dergleichen in unterschiedlichen Bauformen bekannt.

Bei einer bekannten Umwälzpumpe dieser Art ist die Motorelektronik in einem seitlich am Motorgehäuse angebrachten, dieses teilweise umgebenden Klemmenkasten angeordnet, über welchen auch der Netzanschluss des Motors herausgeführt ist. Solche seitlich am Motorgehäuse angeordneten Klemmenkästen bzw. Zusatzgehäuse für die Elektronik haben sich grundsätzlich bewährt, da die Motorelektronik damit konstruktiv einfach und zuverlässig von den flüssigkeitsführenden Bauteilen entfernt angeordnet und damit flüssigkeitsgeschützt ist. Ein gewisser Nachteil besteht jedoch darin, dass die Baugröße durch dieses zusätzliche Gehäuse nicht unerheblich wächst, was insbesondere in beengten Einbausituationen problematisch sein kann.

Aus EP 1 635 069 A1 zählt es bereits zum Stand der Technik, bei einer Nasslaufkreiselpumpe die Motorelektronik oder zumindest einen Teil der Motorelektronik zwischen dem Stator und dem Pumpengehäuse, das Spaltrohr umgehend, anzuordnen. Eine solche Anordnung ist vorteilhaft, da sie eine kompakte Ausbildung des Aggregats ermöglicht und eine Abfuhr der in der Motorelektronik erzeugten Wärme je nach Pumpentyp wahlweise über das Pumpengehäuse oder durch Konvektion nach außen oder durch eine Kombination davon gestattet. Dabei ist die Elektronik in einem hermetisch dichten Raum angeordnet, um ein Eindringen von Feuchtigkeit zu vermeiden. Zwischen Gehäuseteilen sind Dichtringe angeordnet, die dies sicherstellen sollen.

Ein stetes Problem ist, dass bei Alterung von Dichtungen Undichtigkeiten auftreten können, sodass Feuchtigkeit auch in den Bereich der Elektronik eindringen kann, was zur Schädigung oder Zerstörung der Motorelektronik führen kann.

Vor diesem Hintergrund liegt der Erfindung die Aufgabe zugrunde, eine gattungsgemäße Nasslaufkreiselpumpe so auszubilden, dass diese Probleme vermindert werden, wobei ein einfacher und kostengünstiger Aufbau realisiert werden soll.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Die erfindungsgemäße Nasslaufkreiselpumpe ist mit einem flüssigkeitsführenden Pumpengehäuse, einem die Pumpe antreibenden Spaltrohrmotor mit einem Stator und mit einem in dem flüssigkeitsführenden Spaltrohr laufenden Rotor mit einer Welle versehen, auf welcher das Laufrad der Pumpe sitzt. Dabei ist die Motorelektronik oder zumindest ein Teil der Motorelektronik zwischen dem Stator und dem Pumpengehäuse das Spaltrohr umgebend angeordnet.

Grundgedanke ist es somit, die Motorelektronik nicht wie beim Stand der Technik üblich, außen am Motorgehäuse anzuordnen, sondern diese vielmehr im Bereich zwischen Stator und Pumpengehäuse, und zwar in dem Bereich, der das Spaltrohr umgibt, anzuordnen. Hierdurch kann eine besonders kompakte Bauform erreicht werden, da bei geeigneter Auslegung die Motorelektronik innerhalb der Kontur des Pumpengehäuses liegen kann, wodurch sich weitere, im Folgenden noch detailliert beschriebene weitere konstruktive Vorteile ergeben. Diese Anordnung hat zudem den Vorteil, dass die in der Motorelektronik erzeugte Wärme je nach Pumpentyp wahlweise über das Pumpengehäuse oder durch Konvektion nach außen oder durch eine Kombination davon erfolgen kann.

Gemäß der Erfindung weist das die Motorelektronik, insbesondere die Hauptplatine aufnehmende Gehäuse eine zum Pumpengehäuse gerichtete Wand auf, die vom Pumpengehäuse beabstandet ist und die mindestens eine Öffnung aufweist. Darüber hinaus ist der zwischen dieser Wand und dem Pumpengehäuse gebildete Raum mit mindestens einer Öffnung zur Außenumgebung versehen. Auf diese Weise ist das die Motorelektronik aufnehmende Gehäuse über die Öffnung in der Wand sowie die weitere Öffnung zwischen dieser Wand und dem Pumpengehäuse mit der Außenumgebung verbunden, so dass über diese Öffnung Schwitzwasser abgeführt werden kann. Auch ist über diese Öffnungen ein gewisser Luftaustausch zwischen dem Inneren des Motorelektronikgehäuses und der Außenumgebung gewährleistet, was von Vorteil ist. Dadurch, dass eine vom Pumpengehäuse beabstandete Wand vorgesehen ist, ist das die Hauptplatine aufnehmende Gehäuse bodenseitig geschlossen ausgebildet. Es kann in dem zwischen dieser Wand und dem Pumpengehäuse gebildeten Raum wahlweise eine Wärmeisolierung oder eine Wärmeleitung vorgesehen sein, um eine Kühlung über das Pumpengehäuse zu ermöglichen oder aber, wenn beispielsweise heiße Flüssigkeit gefördert wird, demgegenüber zu isolieren. Eine solche thermische Barriere kann durch geeignete thermische Isolatoren erfolgen.

Besonders vorteilhaft ist es, wenn die Motorelektronik in dem das Spaltrohr umgebenden Bereich derart ausgebildet und angeordnet ist, dass sie eine den Stator überragende radiale Erstreckung aufweist, die vorzugsweise innerhalb der Außenkontur des Pumpengehäuses liegt. Es kann damit der in radialer Richtung ohnehin für das Pumpengehäuse benötigte Raum zur Anordnung der Motorelektronik genutzt werden. Dadurch, dass sich die Motorelektronik radial so weit erstreckt, dass sie den Stator radial überragt, ergeben sich weitere konstruktive Vorteile, da in diesem, den Stator radial überragenden Bereich elektrische/elektronische Bauteile wie Schalter, Anzeigen, Kabelführung und dergleichen angeordnet werden können, die einerseits statornah und damit kompakt angeordnet und von außen zugänglich sind, andererseits jedoch einen besonders einfachen Zugang zu der Motorelektronik aufweisen.

Vorteilhaft ist eine Hauptplatine vorgesehen, welche quer zur Laufradachse das Spaltrohr umgebend zwischen Stator und Pumpe angeordnet ist, über welche die Statorwicklungen angeschlossen sind und welche eine Verbindung zum Anschluss an das Versorgungsnetz aufweist. Der Stator kann dabei durch eine einfache Steckverbindung auf dieser Hauptplatine angeschlossen werden, ebenso kann in dem den Stator überragenden Bereich eine entsprechende Steckverbindung für die Netzversorgung vorgesehen sein. Hierdurch ergibt sich sowohl eine besonders kompakte Bauform als auch eine besonders einfach Konstruktion, da im Idealfall die gesamte Motorelektronik und die Anschlussverdrahtung des Motors auf dieser Hauptplatine zusammengeführt sind.

Gemäß einer vorteilhaften Weiterbildung der Erfindung sind Hauptplatine und Stator mechanisch miteinander verbunden, vorzugsweise zu einer baulichen Einheit. Die mechanische Befestigung des Stators erfolgt also auch über die Hauptplatine, über welche zugleich die elektrische Konnektierung erfolgt.

Dabei können Stator und Hauptplatine in einem gemeinsamen Gehäuse angeordnet sein. Besonders vorteilhaft ist es jedoch, wenn die Hauptplatine in einem Gehäuse und der Stator in einem davon getrennten Gehäuse angeordnet sind und diese beiden Gehäuse elektrisch und mechanisch miteinander verbunden sind. Dann können Stator und Motorelektronik unabhängig voneinander gehandhabt werden, so dass bei entsprechend modularer Auslegung ein Stator mit unterschiedlichen Motorelektronikvarianten eingesetzt werden kann, ohne diesen baulich verändern zu müssen. Da die Hauptplatine vorzugsweise quer zur Längsachse des Spaltrohres, das diese durchsetzt und das auch den Stator durchsetzt, liegt, können alle elektrischen Verbindungen zwischen Stator und Motorelektronik durch einfache Steckverbindungen ausgestaltet werden, wobei die radiale Führung der Gehäuse durch das ohnehin vorhandene Spaltrohr gegeben ist.

Vorteilhaft sind das die Hauptplatine aufnehmende Gehäuse und das den Stator aufnehmende Gehäuse jeweils als unabhängig vom Spaltrohr montierbare Baueinheiten ausgebildet. Eine solche Anordnung hat den besonderen Vorteil, dass die elektrischen/elektronischen Bauteile des Motors unabhängig von den flüssigkeitsführenden Bauteilen der Pumpe nicht nur angeordnet, sondern auch austauschbar. So kann bei einer solchen Anordnung der Stator und die Motorelektronik vom Spaltrohr und somit vom Pumpengehäuse entfernt werden, ohne dass Flüssigkeitsaustritt oder die Pumpe aus ihrer Einbaulage entfernt werden muss.

Unabhängig davon kann gemäß einer vorteilhaften Weiterbildung der Erfindung diese zum Pumpengehäuse gerichtete Wand des die Hauptplatine aufnehmenden Gehäuses wärmeleitend mit wärmeerzeugenden Bauteilen der Motorelektronik verbunden oder durch einen damit verbundenen Wärmeverteiler durchsetzt sein, wobei in diesem Bereich vorzugsweise seitliche Gehäuseöffnungen vorgesehen sind, welche zur Erzeugung einer Konvektionsströmung längs dieser Wand bzw. des Wärmeverteiler dienen.

Um eine möglichst kompakte Bauform zu erreichen, ist es vorteilhaft, die hochbauenden elektrischen und elektronischen Bauteile in dem Bereich der Hauptplatine anzuordnen, welche den Wicklungskopf des Stators radial überragt, so dass diese Bauteile in dem den Wicklungskopf umgebenden Freiraum angeordnet sein können, der typischerweise innerhalb der Außenkontur des Pumpengehäuses liegt.

Wenn eine Abfuhr der in der Motorelektronik entstehenden Abwärme über die Förderflüssigkeit der Pumpe erfolgen soll, dann ist es von Vorteil, wenn die wärmeerzeugenden Bauteile der Motorelektronik auf der der Pumpe zugewandten Seite der Hauptplatine angeordnet und vorzugsweise wärmeleitend mit einer axialen Abdeckung des Pumpengehäuses verbunden sind. Eine solche axiale Abdeckung des Pumpengehäuses, welche eine Wand des Pumpengehäuses bildet, kann beispielsweise durch einen am Spaltrohr vorgesehenen Flansch gebildet sein, der typischerweise aus gut leitendem Metallblech gebildet ist.

Wenn eine solche Ableitung der in der Motorelektronik erzeugten Abwärme über das Pumpengehäuse nicht gewünscht ist, dann kann es zweckmäßig sein, die wärmeerzeugenden Bauteile der Motorelektronik auf der der Pumpe abgewandten Seite der Hauptplatine anzuordnen und diese dann vorzugsweise wärmeleitend mit der Oberfläche des Motorgehäuses zu verbinden. Dann erfolgt die Wärmeabfuhr über die Oberfläche des Stator- bzw. Motorgehäuses.

Da gemäß der Erfindung vorteilhaft die Hauptplatine den Stator radial überragt, können gemäß einer Weiterbildung der Erfindung in diesem Bereich auf der der Pumpe abgewandten Seite der Platine elektrische Anschlüsse für eine elektronische Anzeige, für ein Zusatzmodul, für einen Schalter und/oder für den Netzanschluss vorgesehen sein, um auf diese Weise den dort gebildeten Freiraum einerseits sinnvoll zu nutzen, andererseits diese Bauteile vergleichsweise einfach elektrisch anschließen zu können.

Vorteilhaft ist das Pumpengehäuse an seiner zum Motor weisenden Seite im Wesentlichen mit einer rechteckigen, vorzugsweise einer quadratischen Außenkontur ausgestaltet und das Motorgehäuse kongruent dazu ausgebildet. Es versteht sich, dass hier kein Rechteck oder Quadrat im geometrischen Sinne zu verstehen ist, dass Gehäuseecken gerundet ausgebildet sind und nur in etwa eine solche Außenkontur erlangt wird.

Das Motorgehäuse kann sowohl Stator als auch Motorelektronik aufnehmen und dann eine vom Spaltrohr unabhängig montierbare Einheit bilden. Dabei kann gemäß einer Weiterbildung der Erfindung das Motorgehäuse ganz oder teilweise vergossen ausgebildet oder durch die Vergussmasse selbst gebildet sein. Es handelt sich dann also nicht um ein Gehäuse im eigentlichen Sinne, sondern um die den Stator und gegebenenfalls auch die Motorelektronik umgebende Vergussmasse, die das Gehäuse bildet.

Wenn die Hauptplatine quer zur Längsachse des Spaltrohrs angeordnet ist, dann weist diese vorteilhaft auf ihrer zur Pumpe weisenden Seite einen Erdungskontakt auf, vorzugsweise einen Erdungsstift, der leitend mit dem Pumpengehäuse und/oder der Abdeckung des Pumpengehäuses verbunden ist. Ein solcher Erdungsstift kann leitend in eine entsprechende Ausnehmung im Pumpengehäuse eingreifen, so dass bei der Montage mit dem Fügen dieser Bauteile automatisch auch die erforderliche Erdung erfolgt. Der Erdungsstift kann eine Verdrehsicherung des Motorgehäuses bilden, gegebenenfalls können mehrere Stifte vorgesehen sein.

Besonders zweckmäßig ist es, wenn der eine Teil einer elektrischen Steckverbindung zur Leitungsverbindung der Motorelektronik bzw. des Motors mit dem Versorgungsnetz in dem den Stator radial überragenden Teil des Motorgehäuses vorgesehen ist und die Steckrichtung parallel zur Laufradachse verläuft. Bei dieser Anordnung wird ein bezogen auf die Außenkontur der Pumpe bestehender Freiraum für eine Steckverbindung zum Anschluss der Pumpe an das elektrische Versorgungsnetz genutzt. Die Leitungsführung parallel zur Laufradachse ist besonders günstig, da dies üblicherweise die in Einbaulage frei zugängliche Seite der Pumpe ist.

Befestigt wird das Motorgehäuse anders als beim Stand der Technik vorteilhaft nicht am Pumpengehäuse, sondern mittels am Spaltrohr angreifender Befestigungsmittel, die das Motorgehäuse über das Spaltrohr am Pumpengehäuse zumindest in Achsrichtung des Motors festlegen. Es wird also vorteilhaft das Spaltrohr am Pumpengehäuse befestigt und dann das Motorgehäuse am Spaltrohr. Hierzu kann gemäß der Erfindung am motorseitigen Ende des Spaltrohrs eine umlaufende Nut vorgesehen sein, in welche mindestens eine Rastnase einer endseitigen Platte eingreift, wobei das Motorgehäuse mittels dieser Platte dann über das Spaltrohr am Pumpengehäuse festgelegt ist.

Um jedoch nicht nur eine Festlegung in axialer Richtung, sondern auch in radialer Richtung, also eine Verdrehsicherung zu erreichen, ist gemäß der Erfindung zwischen Pumpengehäuse und Motorgehäuse eine solche vorgesehen. Aufgrund des dort naturgemäß gegebenen größeren Abstands zur Drehachse des Motors können schon mit vergleichsweise einfachen Bauteilen Verdrehsicherungen gebildet werden, welche ausreichende Momentenstabilität aufweisen. Insofern ist es besonders günstig, lediglich die axiale Festlegung des Motorgehäuses über das Spaltrohr und die Verdrehsicherung über gesonderte Fomschlussmittel zwischen Motor- und Pumpengehäuse zu erreichen.

Die Erfindung ist nachfolgend anhand von in der Zeichnung dargestellten Ausführungsbeispielen näher erläutert. Es zeigen:
- Fig. 1: eine perspektivische Ansicht eines Pumpenaggregats 1 von der Motorseite aus,
- Fig. 2: einen Längsschnitt durch das Pumpenaggregat gemäß Fig. 1 längs der Drehachse,

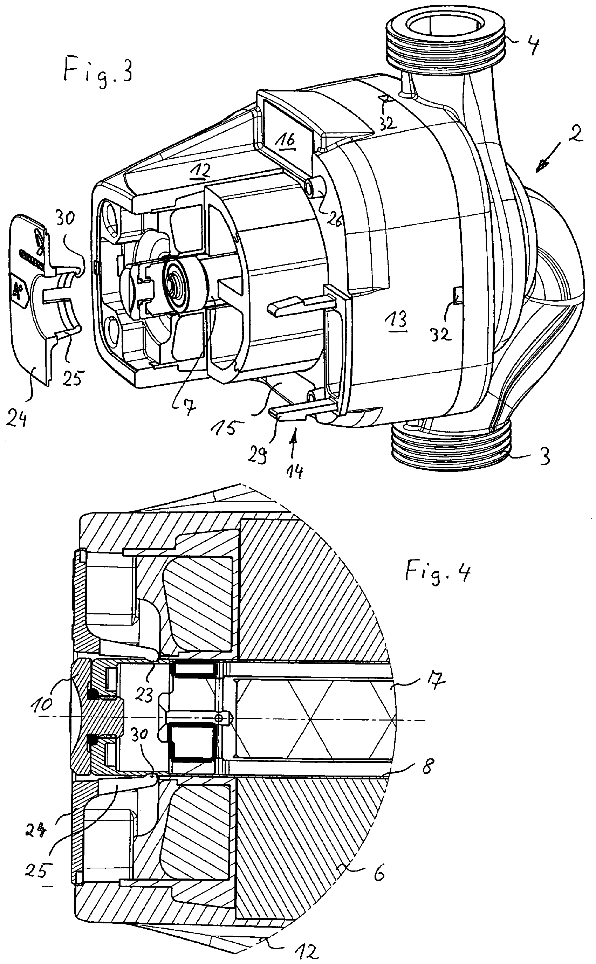

- Fig. 3: eine perspektivische Ansicht des Pumpenaggregats 1 von der Seite mit teilgeschnittenem Motorgehäuse und entfernter Endplatte,
- Fig. 4: in vergrößerter Darstellung den Längsschnitt gemäß Fig. 2 im Endbereich des Motors,
- Fig. 5: eine Explosionsdarstellung des Pumpenaggregats gemäß Fig. 1,
- Fig. 6: eine teilgeschnittene perspektivische Ansicht des Pumpenaggregats von Seiten der Pumpe,
- Fig. 7: die Ansicht gemäß Fig. 6 ohne Pumpe,
- Fig. 8: eine alternative Ausgestaltung in Darstellung nach Fig. 6,
- Fig. 9: eine Darstellung dieser alternativen Ausführung ähnlich Fig. 7,
- Fig. 10: eine perspektivische Darstellung eines in einem Gehäuse eingegliederten Stators,
- Fig. 11: eine perspektivische Darstellung des Stators ohne Gehäuse,
- Fig. 12: in Explosionsdarstellung den Aufbau den Elektronikgehäuses,
- Fig. 13: die Explosionsdarstellung gemäß Fig. 12 aus anderem Blickwinkel,
- Fig. 14: eine perspektivische Ansicht auf eine Hauptplatine mit darauf angebrachtem Stator und
- Fig. 15: eine perspektivische Ansicht auf das mit Hauptplatine und Stator bestückte Motorgehäuse.

Das anhand der Figuren dargestellte Pumpenaggregat 1 weist ein Pumpengehäuse 2 auf, welches als Inline-Gehäuse ausgebildet ist und einen Eingangsanschluss 3 und einen achsgleich dazu angeordneten Ausgangsanschluss 4 aufweist. Vom Eingangsanschluss 3 verläuft ein Kanal zum Saugmund eines Kreiselrades 5 der Pumpe, das über eine innerhalb des Pumpengehäuses 2 ausgebildete Schnecke zum Ausgangsanschluss 4 fördert.

Angetrieben wird die Pumpe durch einen Elektromotor, der durch einen Stator 6 und einen Rotor 7 gebildet ist. Stator 6 und Rotor 7 sind durch ein Spaltrohr 8 getrennt. Der Rotor 7 ist Teil einer Welle 9, auf deren pumpenseitigen Ende das Kreiselrad 5 drehfest befestigt ist. Das Spaltrohr 8 ist als endseitig geschlossener Spaltrohrtopf ausgebildet und weist darauf einen abnehmbaren Verschlussstopfen 10 auf, über welchen das Spaltrohr 8 entlüftet werden kann und die Welle 9 zugänglich ist. Das Spaltrohr 8 weist pumpenseitig einen flanschartigen Ansatz 11 auf, mit dem es direkt am Pumpengehäuse 2 befestigt ist.

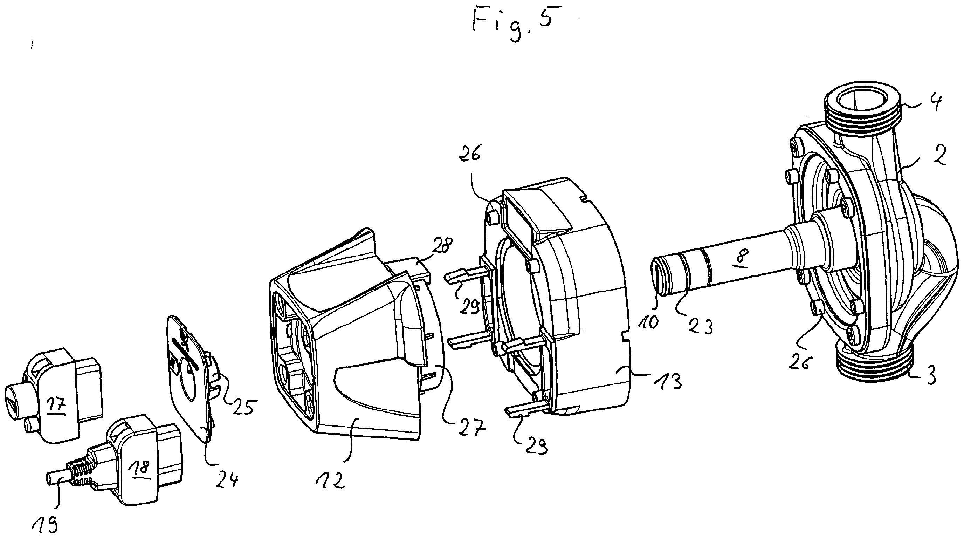

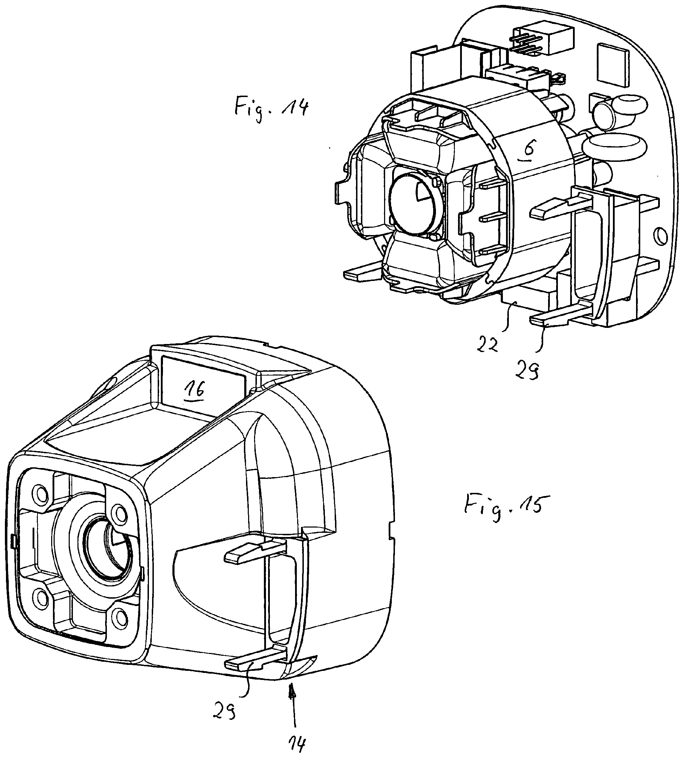

Der Stator 6 ist in einem Statorgehäuse 12 angeordnet, welches sich an ein Elektronikgehäuse 13 anschließt, das zwischen Statorgehäuse 12 und Pumpengehäuse 2 angeordnet ist. Statorgehäuse 12 und Elektronikgehäuse 13 bilden das Motorgehäuse 14, das einstückig, wie in Fig. 15 dargestellt oder mehrteilig, wie anhand von Fig. 5 dargestellt ausgebildet sein kann.

Das Pumpengehäuse 2 hat in Achsrichtung des Rotors 7 gesehen eine im Wesentlichen quadratische Form mit abgerundeten Ecken. Das in Richtung zum Motor daran fluchtend anschließende Elektronikgehäuse 13 setzt diese Form fort, hat also ebenfalls einen im Wesentlichen quadratischen Querschnitt mit abgerundeten Ecken. Das daran in Achsrichtung des Rotors anschließende Statorgehäuse 12 ist nur im Bereich der Ecken stetig in die Außenkontur des Elektronikgehäuses 13 übergeführt, weist jedoch ansonsten einen deutlich kleineren Querschnitt auf, so dass sich eine Abstufung 15 zum Elektronikgehäuse 13 hin ergibt. Das Elektronikgehäuse 13 überragt also in diesem Bereich radial das Statorgehäuse 12.

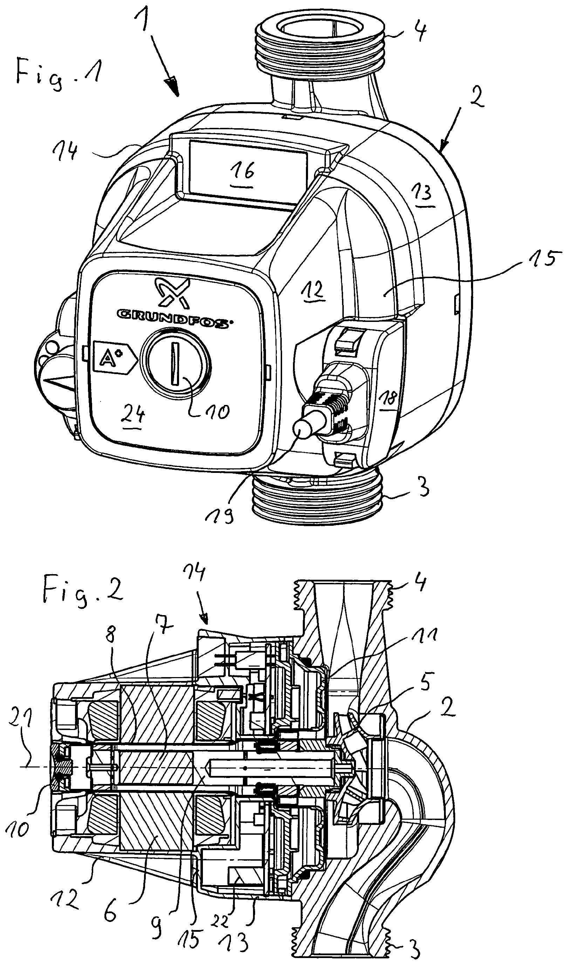

Im Bereich dieser Abstufung 15 ist eine elektronische Anzeige 16 nahe der Oberseite des Motorgehäuses 14 bezogen auf die normale Einbaulage gemäß Fig. 1 vorgesehen. In Fig. 1 linksseitig ist im Bereich der Abstufung 15 ein Drehschalter 17 angeordnet, mit dem beispielsweise die Drehzahl der Pumpe von außen eingestellt werden kann. Auf der anderen, in Fig. 1 rechten Seite ist im Bereich der Abstufung 15 eine Steckverbindung für den Netzanschluss des Pumpenaggregats 1 vorgesehen. Ein Stecker 18 ist dort angeordnet, der mit einem Netzkabel 19 verbunden ist. Die Bauteile 16, 17, 18, die hier nur beispielhaft für hier anzuordnende beliebige geeignete Bauteile stehen, sind unmittelbar benachbart zu Motorgehäuse 14, in dem durch die Abstufung 15 gebildeten Freiraum angeordnet.

Die Bauteile 16, 17, und 18 sind über entsprechende elektrische Steckverbindungen unmittelbar mit einer innerhalb des Elektronikgehäuses 13 angeordneten Hauptplatine 20 verbunden, welche, das Spaltrohr 8 umgebend, senkrecht zur Rotorachse 21 angeordnet ist. Da diese Bauteile 16, 17, 18 in Achsrichtung 21 gesehen seitlich vom Stator 6 liegen, können diese neben dem Stator 6 auf der Hauptplatine 20 kontaktiert werden, die die gesamte Motorelektronik sowie den Netzanschluss trägt.

Wie in Fig. 2 deutlich sichtbar ist, sind dabei die elektronischen Bauteile, die eine Bauhöhe aufweisen, welche den Abstand zwischen Hauptplatine 20 und Stator 6 überragt, in dem seitlichen Bereich, also in dem Bereich der Hauptplatine 20 angeordnet, mit welcher diese den Stator 6 radial überragt. Ein solches Bauteil ist in Fig. 2 mit 22 gekennzeichnet.

Ungeachtet dessen, ob Statorgehäuse 12 und Elektronikgehäuse 13 einstückig, wie in Fig. 15 oder zweistückig, wie in Fig. 5 dargestellt, ausgebildet sind, sind diese Bauteile 12, 13 formschlüssig am Pumpengehäuse 2 festgelegt, und zwar nicht unmittelbar, sondern über das Spaltrohr 8. Dieses weist hierzu eine umlaufende Nut 23 auf, in welche eine umlaufende Rastnase 30 eines an einer Endplatte 24 stirnseitig vorgesehenen unterbrochenen Rings 25 eingreift, und zwar unter Einschluss von Statorgehäuse 12 und Elektronikgehäuse 13. Diese Endplatte legt somit das Motorgehäuse 14 in Richtung der Achse 21 am Spaltrohr 8 und somit am Pumpengehäuse 2 fest. Als Verdrehsicherung sind an dem flanschartigen Ansatz 11 des Spaltrohrs 8 Zapfen 26 vorgesehen, die in entsprechende Ausnehmungen des Elektronikgehäuses 13 oder umgekehrt eingreifen. Wenn Statorgehäuse 12 und Elektronikgehäuse 13 zweiteilig ausgeführt sind, dann können solche Zapfen 26 auch zwischen diesen beiden Gehäuseteilen als Verdrehsicherung vorgesehen sein, wie in Fig. 5 beispielhaft dargestellt ist. Auf diese Weise kann der gesamte Motor in Form des Motorgehäuses 14 nach Entfernen der Endplatte 24 vom Pumpengehäuse 2 abgezogen werden und in umgekehrter Weise montiert werden, ohne dass flüssigkeitsführende Teile der Pumpe zu lösen sind.

In der anhand der Fig. 5 und 10 bis 13 dargestellten zweiteiligen Ausführung des Motorgehäuses 14 überragt der Stator 6 den eigentlichen Grundkörper des Statorgehäuses 12 zur Pumpe hin. Das Elektronikgehäuse 13 weist fluchtend dazu eine entsprechende zentrale Ausnehmung auf, in welche dieser ringförmige Teil 27 des Statorgehäuses 12 eingreift. Über eine Steckverbindung 28 erfolgt die elektrische Kontaktierung des Stators 6. Drehschalter 17 und Netzstecker 18 sind über entsprechende Rastzungen 29 am Elektronikgehäuse 13 lösbar befestigt.

Die Steckverbindung 28 besteht aus einem statorseitigen, in Richtung zur Pumpe vorspringenden Steckerteil sowie einem entsprechenden Anschlussteil auf der Hauptplatine 20. Das Anschlussteil kann beispielsweise durch Kontaktstifte gebildet sein, die vom Steckerteil muffenartig umgriffen werden. In vergleichbarer Weise sind die Bauteile 16, 17 und 18 direkt mit der Hauptplatine 20 elektrischleitend verbunden.

Das Elektronikgehäuse 13 weist auf der zur Pumpe weisenden Seite eine Wandung 31 auf, die in Einbaulage mit Abstand zu dem flanschartigen Ansatz 11, welcher eine Wandung des Pumpengehäuses bildet, angeordnet ist. Der dazwischen gebildete Freiraum ist über Ausnehmungen 32 in der Außenseite des Elektronikgehäuses 13, und zwar an der Außenseite des Gehäuses zur Außenumgebung hin geöffnet. Weiterhin sind in der Wandung 31 Ausnehmungen 33 vorgesehen, welche einen Zugang zu dem sonst geschlossenen Elektronikgehäuse 13 bilden. Über die Ausnehmungen 33, 32 kann ein Gasaustausch zwischen der Außenumgebung und dem Inneren des Elektronikgehäuses 13 erfolgen, darüber hinaus kann hierüber Schwitzwasser aus dem Elektronikgehäuse sowie dem jenseits der Wandung 31 gebildeten Raum zwischen Elektronikgehäuse und Pumpengehäuse 2 ins Freie entweichen.

Durchsetzt wird die Wandung 31 durch einen Erdungsstift 34, welcher elektrisch leitend auf der zur Pumpe weisenden Seite der Hauptplatine 2 angeordnet ist und nach Montage des Elektronikgehäuses 13 am Pumpengehäuse 2 eine elektrische Erdungsverbindung zum Pumpengehäuse 2 bildet. Hierfür ist in der zum Elektronikgehäuse 13 weisenden Stirnseite des Pumpengehäuses 2 eine entsprechende Ausnehmung vorgesehen, in welche der Erdungsstift 34 leitend eingreift. Das Pumpengehäuse 2 besteht aus elektrisch leitendem Werkstoff. Der Erdungsstift kann darüber hinaus auch eine Verdrehsicherung für das Elektronikgehäuse 13 bezogen auf das Pumpengehäuse 2 bilden. Darüber hinaus ist eine solche Drehsicherung jedoch durch vier Zapfen 26 vorgesehen, welche in die Ausnehmungen 33 eingreifen. Es versteht sich, dass, wenn die Ausnehmungen 33 auch zur Be-/Entgasung bzw. zur Abfuhr des Kondenswassers vorgesehen sein sollen, die Anzahl der Ausnehmungen 33 größer als die Anzahl der darin eingreifenden Zapfen 26 sein muss. Alternativ können hierzu auch in der Wandung 31 vorgesehene Ausnehmungen 35 dienen, welche zur Aufnahme der Schraubenköpfe vorgesehen sind, mit welchen der flanschartige Teil 11 des Spaltrohrs 8 am Pumpengehäuse 2 festgeschraubt ist. Diese Ausnehmungen 35 können geschlossen als Sacklöcher oder offen ausgebildet sein, je nachdem, ob eine Verbindung mit dem Inneren des Elektronikgehäuses 13 erfolgen soll oder nicht.

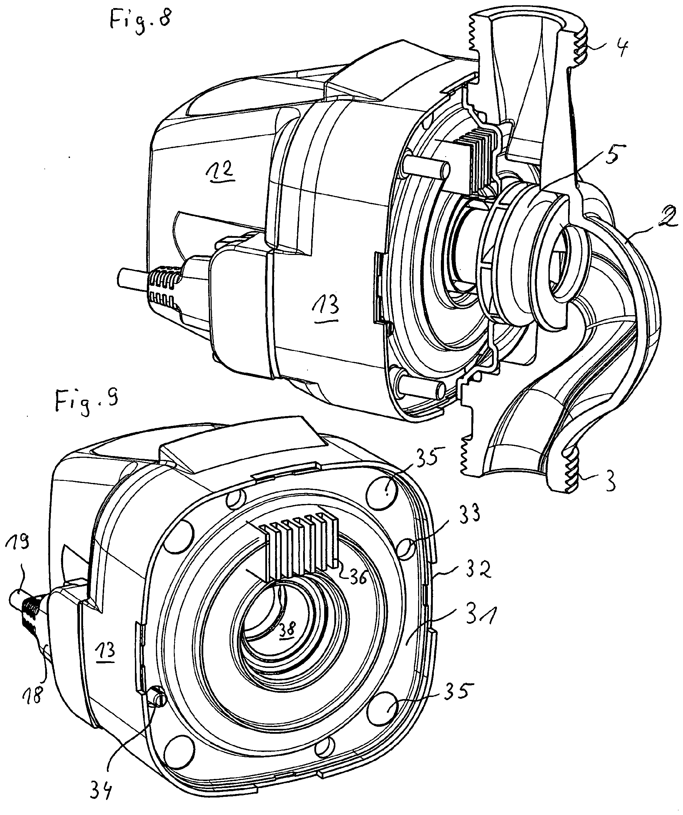

Der zwischen Elektronikgehäuse 13 und Pumpengehäuse 2 gebildete Raum kann über die Ausnehmungen 32 von der Umgebungsluft durchströmt werden und somit zu Kühlzwecken genutzt werden. Hierzu ist bei der anhand der Figuren 8 und 9 dargestellten Ausführungsform an der zur Pumpe weisenden Seite der Hauptplatine 20 ein (nicht dargestellt) Wärmeverteiler vorgesehen, auf dem ein Rippenkühlkörper 36 sitzt, welcher die Wandung 31 durchsetzt und in diesen Raum ragt. Bei Wärmebeaufschlagung dieses Rippenkühlkörpers ergibt sich in dem Raum über die Ausnehmungen 32 eine natürliche Konvektionsströmung, welche den Rippenkühlkörper 36 und damit die wärmeerzeugende Elektronik im Elektronikgehäuse 13 kühlt. Je nach Einsatzzweck der Pumpe kann eine weitere oder zusätzliche Kühlung über das Pumpengehäuse, insbesondere über den flanschartigen Ansatz 11 erfolgen, wenn zu erwarten ist, dass das zu fördernde Medium eine Wärmesenke bildet. Ist die Pumpe hingegen zur Förderung von heißer oder warmer Flüssigkeit vorgesehen, dann ist es zweckmäßig, die zum Elektronikgehäuse 13 weisende Wandung des Pumpengehäuses mit einer wärmeisolierenden Schicht zu versehen und damit Motorgehäuse 14 und Pumpengehäuse 2 thermisch voneinander zu isolieren.

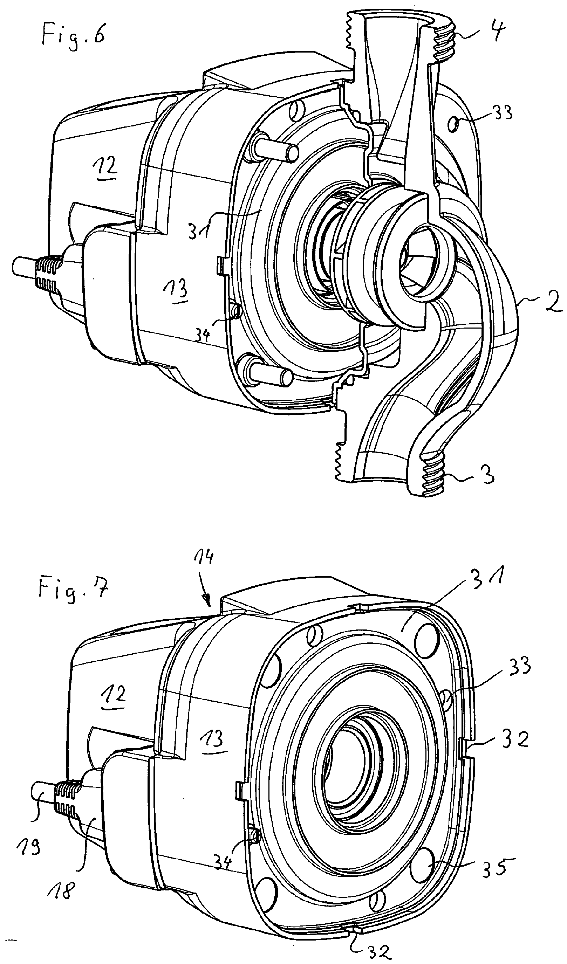

Bei der anhand der Figuren 8 und 9 dargestellten Ausführung, bei welcher eine gezielte Wärmeabfuhr über einen Rippenkühlkörper 36 erfolgt, sind die Ausnehmungen 32 vergleichsweise groß ausgebildet, um einen ausreichenden Querschnitt zur Erzeugung eines Kühlluftstroms zu bilden. Bei der anhand der Figuren 6 und 7 dargestellen Ausführungsvariante erfolgt die Kühlung der Motorelektronik über das Motorgehäuse, d. h. über die Außenseite des Motorgehäuses. Hier sind die Ausnehmungen 32 vergleichsweise klein.

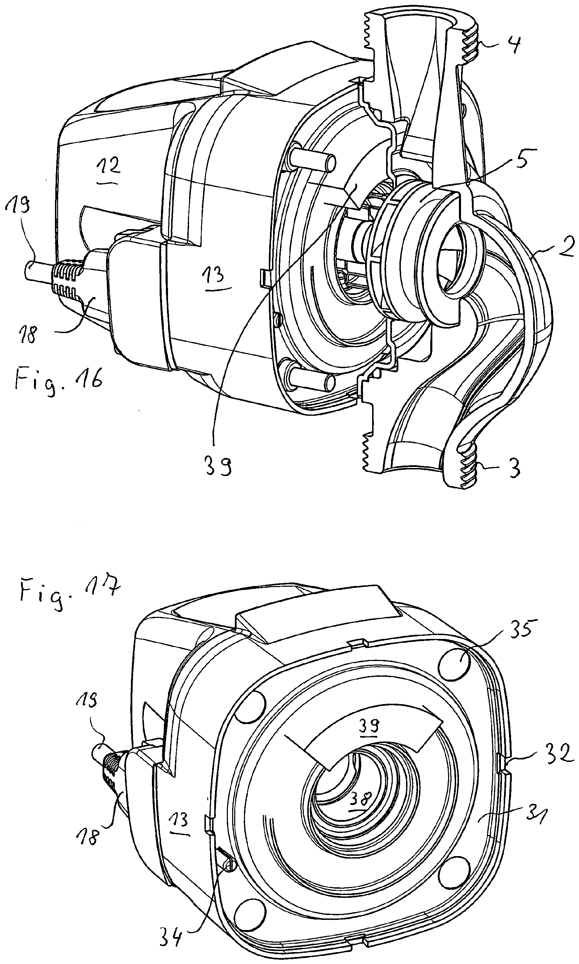

Wenn, wie weiter oben beschrieben, die Kühlung der innerhalb des Elektronikgehäuses 13 angeordneten wärmeerzeugenden Elektronik über die Förderflüssigkeit der Pumpe erfolgen soll, dann ist es zweckmäßig, den Wärmeverteiler im Boden des Elektronikgehäuses 13 so auszubilden, dass dieser bis an die Wandung 11 des Pumpengehäuses heranragt und an dieser wärmeleitend anliegt. Eine solche Ausbildung ist in den Figuren 16 und 17 dargestellt. Deutlich sichtbar ist dort der Wärmeverteiler 39, dessen zur Pumpe gerichtete, in Figur 17 sichtbare Stirnfläche wärmeleitend an der Wandung 11 des Pumpengehäuses anliegt und damit Wärme an das unmittelbar dahinter strömende Förderfluid überträgt. Bei dieser Ausführung sind die Ausnehmungen 32 von kleinerem Querschnitt, da diese nur zur Abfuhr etwaigen Kondenswassers, nicht jedoch zur Erzeugung einer Konvektionsströmung längs der Wandung 31 bestimmt und vorgesehen sind.

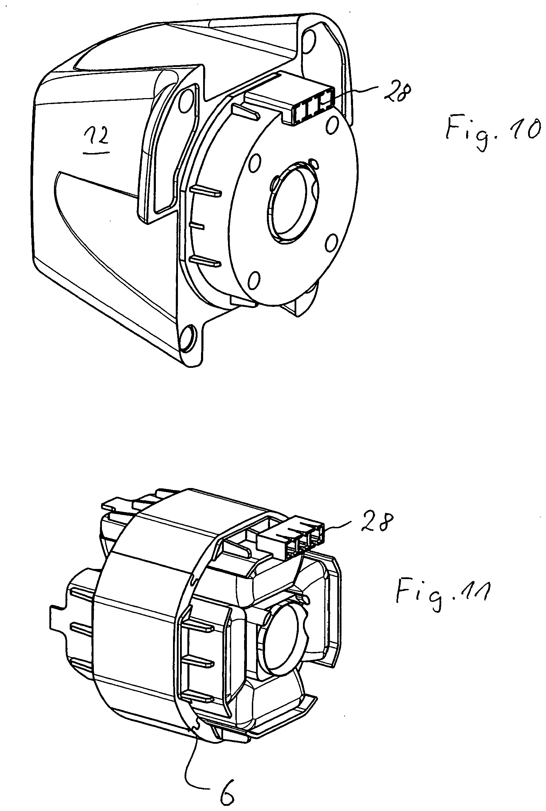

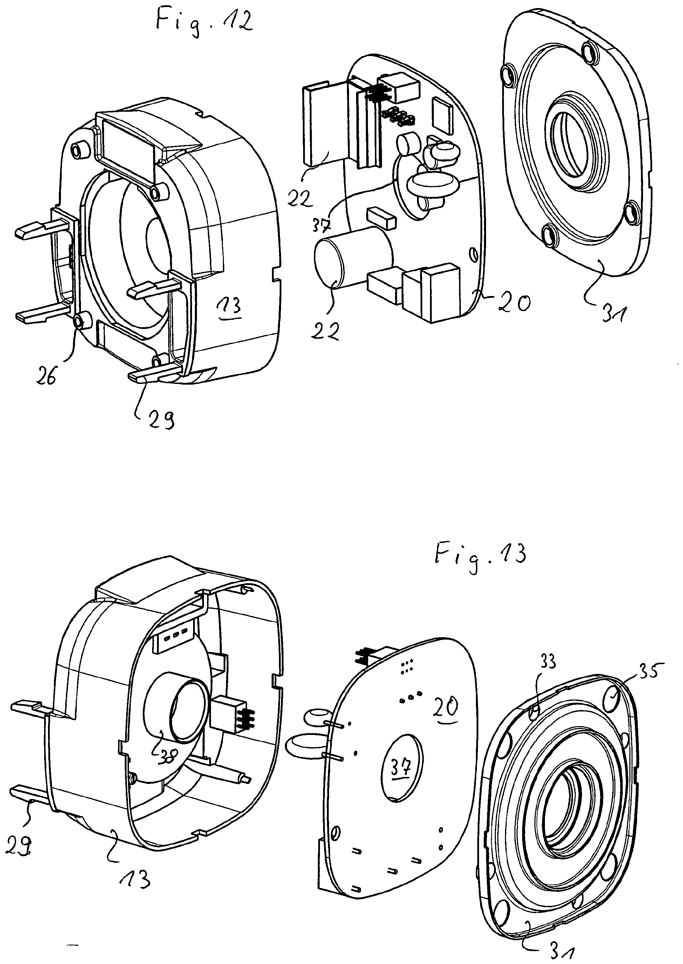

Wenn das Motorgehäuse 14 zweiteilig ausgebildet ist, wie es anhand der Figuren 10 bis 13 dargestellt ist, dann ist ein Statorgehäuse 12 und ein Elektronikgehäuse 13 vorgesehen, die in vorbeschriebener Weise miteinander verbunden sind, so dass durch die Steckverbindung 28 der Stator mit der Hauptplatine 20 elektrisch verbunden wird, die sämtlichen weiteren elektrischen Anschlüsse sowie die gesamte Motorelektronik trägt. Die Platine 20 weist eine zentrale Ausnehmung 37 auf, die von einem ringförmigen inneren Gehäuseteil 38 durchsetzt wird, so dass ein in sich nach außen und innen (zum Spaltrohr 8 hin) geschlossenes Elektronikgehäuse gebildet ist, das jedoch eine zentrale Durchbrechung für das Spaltrohr 8 aufweist. Das Elektronikgehäuse 13 kann, wie anhand der Figuren 12 und 13 ersichtlich, hermetisch geschlossen ausgebildet sein oder aber, wie vorbeschrieben, Entlüftungs-/Entwässerungsöffnungen zu dem zwischen Elektronikgehäuse 13 und Pumpengehäuse 2 gebildeten Raum aufweisen. Auch das Statorgehäuse 12 ist hermetisch abgeschlossen. Es kann ebenso wie das Elektronikgehäuse 13 durch ein hohlkörperartiges Gehäuseteil oder durch eine Vergussmasse gebildet sein, es kann auch ein hohlkörperartiges Gehäuseteil ganz oder teilweise vergossen sein, sei es mit dem Stator 6 oder mit der auf der Hauptplatine 20 angeordneten Motorelektronik.

Bei der anhand der Figuren 14 und 15 dargestellten Ausführungsvariante ist das Motorgehäuse 14 einteilig ausgebildet. Im Unterschied zu der vorbeschriebenen Ausführungsform ist hier der Stator 6 unmittelbar auf der Hauptplatine 20 befestigt und elektrisch kontaktiert. Im Übrigen entspricht der Aufbau der Platine 20 der Vorbeschriebenen. Auf die Zapfen 26 mit den dazu fluchtenden Ausnehmungen im Statorgehäuse 12 kann bei dieser Ausführungsvariante verzichtet werden, die Verdrehsicherung erfolgt einzig zwischen den Zapfen 26 am flanschartigen Ansatz 11 des Spaltrohres 8 und den entsprechenden Ausnehmungen 33 in der Wandung 31 des Motorgehäuses 14.

Es sei darauf hingewiesen, dass die Zapfen 26 nicht nur als Verdrechsicherung, sondern auch zur Führung zwischen den Bauteilen sowie zur Erhöhung der Stabilität des Gesamtaggregates dienen.

### Bezugszeichenliste

- 1: Pumpenaggregat
- 2: Pumpengehäuse
- 3: Eingangsanschluss
- 4: Ausgangsanschluss
- 5: Kreiselrad
- 6: Stator
- 7: Rotor
- 8: Spaltrohr
- 9: Welle
- 10: Verschlussstopfen
- 11: flanschartiger Ansatz am Spaltrohr
- 12: Statorgehäuse
- 13: Elektronikgehäuse
- 14: Motorgehäuse
- 15: Abstufung
- 16: Anzeige
- 17: Drehschalter
- 18: Stecker
- 19: Netzkabel
- 20: Hauptplatine
- 21: Rotorachse
- 22: elektronisches Bauteil
- 23: Nut
- 24: Endplatte
- 25: unterbrochener Ring
- 26: Zapfen
- 27: ringförmiger Teil
- 28: Steckverbindung
- 29: Rastzungen
- 30: Rastnase
- 31: Wandung
- 32: Ausnehmungen
- 33: Ausnehmungen
- 34: Erdungsstift
- 35: Ausnehmungen
- 36: Rippenkühlkörper
- 37: Ausnehmung
- 38: ringförmiges Gehäuseteil
- 39: Wärmeverteiler

## Patentansprüche

1. Nasslaufkreiselpumpe mit einem flüssigkeitsführenden Pumpengehäuse (2), einem die Pumpe antreibenden Spaltrohrmotor mit einem Stator (6) und mit einem in dem flüssigkeitsführenden Spaltrohr (8) laufenden Rotor (7) mit einer Welle (9), auf welcher das Laufrad (5) der Pumpe sitzt, und mit einer Motorelektronik, wobei die Motorelektronik oder zumindest ein Teil der Motorelektronik zwischen dem Stator (6) und dem Pumpengehäuse (2) das Spaltrohr (8) umgebend in einem Gehäuse (13) angeordnet ist, welches eine zum Pumpengehäuse (2) gerichtete Wand (31) aufweist, **dadurch gekennzeichnet, dass** die zum Pumpengehäuse (2) gerichtete Wand (31) des Gehäuses (13) eine Öffnung (33) aufweist und vom Pumpengehäuse (2) beabstandet ist und dass der zwischen dieser Wand (31) und dem Pumpengehäuse (2) gebildete Raum mindestens eine Öffnung (32) zur Außenumgebung aufweist.

2. Nasslaufkreiselpumpe nach Anspruch 1, **dadurch gekennzeichnet, dass** die Motorelektronik in dem das Spaltrohr (8) umgebenden Bereich derart ausgebildet und angeordnet ist, dass sie eine den Stator (6) überragende radiale Erstreckung aufweist, die vorzugsweise jedoch innerhalb der Außenkontur des Pumpengehäuses (2) liegt.

3. Nasslaufkreiselpumpe nach einem der vorhergehenden Ansprüche, **dadurch gekennzeichnet, dass** eine Hauptplatine (20) vorgesehen ist, welche quer zur Laufradachse (21) das Spaltrohr (8) umgebend zwischen Stator (6) und Pumpe angeordnet ist, über welche die Statorwicklungen angeschlossen sind und welche eine Verbindung zum Anschluss an das Versorgungsnetz (19) aufweist.

4. Nasslaufkreiselpumpe nach einem der vorhergehenden Ansprüche, **dadurch gekennzeichnet, dass** die Hauptplatine (20) mechanisch mit einem Stator (6) vorzugsweise zu einer baulichen Einheit verbunden ist.

5. Nasslaufkreiselpumpe nach einem der vorhergehenden Ansprüche, **dadurch gekennzeichnet, dass** die Hauptplatine (20) in einem Gehäuse (13) und der Stator (6) in einem davon getrennten Gehäuse (12) angeordnet sind, welche elektrisch und mechanisch miteinander verbunden sind.

6. Nasslaufkreiselpumpe nach einem der vorhergehenden Ansprüche, **dadurch gekennzeichnet, dass** das die Hauptplatine (20) aufnehmende Gehäuse (13) und das den Stator (6) aufnehmende Gehäuse (12) jeweils eine unabhängig vom Spaltrohr (8) montierbare Baueinheit bilden.

7. Nasslaufkreiselpumpe nach einem der vorhergehenden Ansprüche, **dadurch gekennzeichnet, dass** in dem Raum zwischen Pumpengehäuse (2) und dem die Hauptplatine (20) aufnehmenden Gehäuse (13) eine thermische Barriere angeordnet ist.

8. Nasslaufkreiselpumpe nach einem der vorhergehenden Ansprüche, **dadurch gekennzeichnet, dass** die zum Pumpengehäuse (2) gerichtete Wand (31) des die Hauptplatine (20) aufnehmenden Gehäuses (13) wärmeleitend mit wärmeerzeugenden Bauteilen der Motorelektronik verbunden oder durch einen damit verbundenen Wärmeverteiler durchsetzt ist, und dass seitliche Gehäuseöffnungen (32) zur Erzeugung einer Konvektionsströmung längs dieser Wand (31) bzw. des Wärmeverteilers vorgesehen sind.

9. Nasslaufkreiselpumpe nach einem der vorhergehenden Ansprüche, **dadurch gekennzeichnet, dass** hochbauende elektrische und elektronische Bauteile (22) in dem Bereich der Hauptplatine (20) angeordnet sind, welcher zumindest den Wicklungskopf des Stators (6) radial überragt.

10. Nasslaufkreiselpumpe nach einem der vorhergehenden Ansprüche, **dadurch gekennzeichnet, dass** wärmeerzeugende Bauteile der Motorelektronik auf der der Pumpe zugewandten Seite der Hauptplatine (20) angeordnet und vorzugsweise wärmeleitend mit einer axialen Abdeckung (11) des Pumpengehäuses (2) verbunden sind.

11. Nasslaufkreiselpumpe nach einem der vorhergehenden Ansprüche, **dadurch gekennzeichnet, dass** wärmeerzeugende Bauteile der Motorelektronik auf der der Pumpe abgewandten Seite der Hauptplatine (20) angeordnet sind und vorzugsweise wärmeleitend mit der Oberfläche des Motorgehäuses (14) verbunden sind.

12. Nasslaufkreiselpumpe nach einem der vorhergehenden Ansprüche, **dadurch gekennzeichnet, dass** die Hauptplatine in dem Bereich, in dem sie den Stator (6) radial überragt, auf der der Pumpe abgewandten Seite elektrische Anschlüsse für eine elektronische Anzeige (16), für ein Zusatzmodul, für einen Schalter (17) und/oder für den Netzanschluss (18) aufweist.

13. Nasslaufkreiselpumpe nach einem der vorhergehenden Ansprüche, **dadurch gekennzeichnet, dass** das Pumpengehäuse (2) an seiner zum Motor weisenden Seite eine im Wesentlichen rechteckige, vorzugsweise quadratische Außenkontur aufweist und dass das Motorgehäuse (16) kongruent dazu ausgebildet ist.

14. Nasslaufkreiselpumpe nach einem der vorhergehenden Ansprüche, **dadurch gekennzeichnet, dass** das Motorgehäuse (14) Stator (6) und Motorelektronik aufnimmt und eine vom Spaltrohr (8) unabhängig montierbare Einheit bildet.

15. Nasslaufkreiselpumpe nach einem der vorhergehenden Ansprüche, **dadurch gekennzeichnet, dass** das Motorgehäuse (14) ganz oder teilweise vergossen ausgebildet oder durch die Vergussmasse gebildet ist.

16. Nasslaufkreiselpumpe nach einem der vorhergehenden Ansprüche, **dadurch gekennzeichnet, dass** die Hauptplatine (20) auf der zur Pumpe weisenden Seite einen Erdungskontakt, vorzugsweise einen Erdungsstift (34) aufweist, der leitend mit dem Pumpengehäuse (2) und/oder der Abdeckung (11) des Pumpengehäuses (2) verbunden ist.

17. Nasslaufkreiselpumpe nach einem der vorhergehenden Ansprüche, **dadurch gekennzeichnet, dass** der eine Teil einer elektrischen Steckverbindung zur Leitungsverbindung mit dem Versorgungsnetz in dem den Stator (6) radial überragenden Teil des Motorgehäuses (14) vorgesehen ist, wobei die Steckrichtung parallel zur Laufradachse (21) angeordnet ist.

18. Nasslaufkreiselpumpe nach einem der vorhergehenden Ansprüche, **dadurch gekennzeichnet, dass** am Spaltrohr (8) angreifende Befestigungsmittel (24, 25, 30) vorgesehen sind, welche das Motorgehäuse (14) am Pumpengehäuse (2) zumindest in Achsrichtung des Rotors (7) festlegen.

19. Nasslaufkreiselpumpe nach einem der vorhergehenden Ansprüche, **dadurch gekennzeichnet, dass** nahe dem motorseitigen Ende des Spaltrohrs (8) eine umlaufende Nut (23) vorgesehen ist, in welche mindestens eine Rastnase (30) einer endseitigen Platte (24) eingreift, wobei das Motorgehäuse (14) mittels dieser Platte (24) am Pumpengehäuse (2) festgelegt ist.

20. Nasslaufkreiselpumpe nach einem der vorhergehenden Ansprüche, **dadurch gekennzeichnet, dass** eine Verdrehsicherung (26) zwischen Pumpengehäuse (2) und Motorgehäuse (14) vorgesehen ist, vorzugsweise durch Formschlussmittel zwischen Motor- und Pumpengehäuse.

## Claims

1. A wet-running centrifugal pump with a pump casing (2) which leads fluid, with a canned motor which drives the pump, said motor having a stator (6) and a rotor (7) which runs in the fluid-leading can (8) and which has a shaft (9), on which the impeller (5) of the pump is seated, and with motor electronics, wherein the motor electronics or at least part of the motor electronics are/is arranged in a housing (13) between the stator (6) and the pump casing (2) in a manner surrounding the can (8), said housing comprising a wall (31) which is directed to the pump casing (2), **characterised in that** the wall (31) of the housing (13) which is directed to the pump casing (2) comprises an opening (33) and is distanced to the pump casing (2), and that the space which is formed between this wall (31) and the pump casing (2) comprises at least one opening (32) to the outer environment.

2. A wet-running centrifugal pump according to claim 1, **characterised in that** the motor electronics in the region which surrounds the can (8) is arranged and designed in a manner such that it has a radial extension which projects beyond the stator (6) and which preferably however lies within the outer contour of the pump casing (2).

3. A wet-running centrifugal pump according to one of the preceding claims, **characterised in that** a main circuit board (20) which transversely to the impeller axis (21) is arranged between the stator (6) and the pump in a manner surrounding the can (8) and via which the stator windings are connected and which comprises a connection for connecting to the supply mains (19) is provided.

4. A wet-running centrifugal pump according to one of the preceding claims, **characterised in that** the main circuit board (20) is mechanically connected to the stator (6), preferably into a construction unit.

5. A wet-running centrifugal pump according to one of the preceding claims, **characterised in that** the main circuit board (20) is arranged in a housing (13) and the stator (6) is arranged in a housing (12) which is separated therefrom, and these are electrically and mechanically connected to one another.

6. A wet-running centrifugal pump according to one of the preceding claims, **characterised in that** the housing (13) which receives the main circuit board (20), and the housing (12) which receives the stator (6) each form a construction unit which can be assembled independently of the can (8).

7. A wet-running centrifugal pump according to one of the preceding claims, **characterised in that** a thermal barrier is arranged in the space between the pump casing (2) and the housing (13) which receives the main circuit board (20).

8. A wet-running centrifugal pump according to one of the preceding claims, **characterised in that** the wall (31) of the housing (13) accommodating the main circuit board (20), said wall being directed to the pump casing (2), is connected to the heat-producing components of the motor electronics in a heat-conducting manner, or a heat distributor which is connected to these passes through this wall, and that lateral housing openings (32) for producing a convection flow along this wall (31) or the heat distributor are provided.

9. A wet-running centrifugal pump according to one of the preceding claims, **characterised in that** the tall electrical and electronic components (22) are arranged in the region of the main circuit board (20) which projects radially at least beyond the end windings of the stator (6).

10. A wet-running centrifugal pump according to one of the preceding claims, **characterised in that** heat-producing components of the motor electronics are arranged on the side of the main circuit board (20) which faces the pump and are connected to an axial covering (11) of the pump casing (2) preferably in a heat-conducting manner.

11. A wet-running centrifugal pump according to one of the preceding claims, **characterised in that** heat-producing components of the motor electronics are arranged on the side of the main circuit board (20) which is distant to the pump and are connected to the surface of the motor housing (14) preferably in a heat-conducting manner.

12. A wet-running centrifugal pump according to one of the preceding claims, **characterised in that** the main circuit board, in the region, in which it projects radially beyond the stator (6) and on the side which is away from the pump comprises electrical connections for an electronic display (16), for an additional module, for a switch (17) and/or for the mains connection (18).

13. A wet-running centrifugal pump according to one of the preceding claims, **characterised in that** the pump casing (2) on its side facing the motor has an essentially rectangular, preferably square outer contour, and that the motor housing (16) is formed congruently to this.

14. A wet-running centrifugal pump according to one of the preceding claims, **characterised in that** the motor housing (14) accommodates the stator (6) and the motor electronics, and forms a unit which can be assembled independently of the can (8).

15. A wet-running centrifugal pump according to one of the preceding claims, **characterised in that** the motor housing (14) is designed in a completely or partially moulded manner or is formed by the moulded mass.

16. A wet-running centrifugal pump according to one of the preceding claims, **characterised in that** the main circuit board (20) on the side which faces the pump comprises an earthing contact, preferably an earthing pin (34), which is connected to the pump casing (2) and/or to the covering (11) of the pump casing (2) in a conductive manner

17. A wet-running centrifugal pump according to one of the preceding claims, **characterised in that** the one part of an electrical plug-in connection for the lead connection to the supply mains is provided in the part of the motor housing (14) which projects radially beyond the stator (6), wherein the plug-in direction is arranged parallel to the impeller axis (21).

18. A wet-running centrifugal pump according to one of the preceding claims, **characterised in that** fastening means (24, 25, 30) which engage on the can (8) are provided, said fastening means fixing the motor housing (14) on the pump casing (2) at least in the axial direction of the rotor (7).

19. A wet-running centrifugal pump according to one of the preceding claims, **characterised in that** a peripheral groove (23) is provided close to the motor-side end of the can (8), into which groove at least one locking lug (30) of a terminal plate (24) engages, wherein the motor housing (14) is fixed on the pump casing (2) by way of this plate (24).

20. A wet-running centrifugal pump according to one of the preceding claims, **characterised in that** a rotation lock (26) is provided between the pump casing (2) and the motor housing (14), preferably by way of positive-fit means between the motor housing and the pump casing.

## Revendications

1. Pompe centrifuge à fonctionnement humide comprenant un carter de pompe (2) contenant un liquide, un moteur à gaine entraînant la pompe et ayant un stator (6) et un rotor (7) qui tourne dans la gaine (8) contenant un liquide et qui comporte un axe (9) sur lequel est disposée la turbine (5) de la pompe, et une électronique de moteur, l'électronique de moteur ou au moins une partie de l'électronique de moteur étant disposée dans un boîtier (13) entre le stator (6) et le carter de pompe (2) et entourant la gaine (8), le boîtier comprenant une paroi (31) orientée vers le carter de pompe (2), **caractérisée en ce que** la paroi (31) du boîtier (13) orientée vers le carter de pompe (2) comprend une ouverture (33) et est espacée du carter de pompe (2) et **en ce que** l'espace formé entre la paroi (31) et le carter de pompe (2) comprend au moins une ouverture (32) vers l'environnement extérieur.

2. Pompe centrifuge à fonctionnement humide selon la revendication 1, **caractérisée en ce que** l'électronique de moteur est conçue et disposée dans la zone entourant la gaine (8) de façon qu'elle présente une étendue radiale allant au-delà du stator (6) mais restant de préférence à l'intérieur des contours extérieurs du carter de pompe (2).

3. Pompe centrifuge à fonctionnement humide selon l'une des revendications précédentes, **caractérisée en ce qu'**il est prévu une platine principale (20) qui est disposée entre le stator (6) et la pompe, transversalement à l'axe (21) de la turbine et entourant la gaine (8), par laquelle platine les enroulements de stator sont raccordés et qui comprend une liaison pour le raccordement au réseau d'électricité (19).

4. Pompe centrifuge à fonctionnement humide selon l'une des revendications précédentes, **caractérisée en ce que** la platine principale (20) est reliée mécaniquement au stator (6), de préférence pour former une unité de construction.

5. Pompe centrifuge à fonctionnement humide selon l'une des revendications précédentes, **caractérisée en ce que** la platine principale (20) est disposée dans un boîtier (13) et que le stator (6) est disposé dans un carter (12) séparé de ce dernier et qui sont reliés l'un à l'autre électriquement et mécaniquement.

6. Pompe centrifuge à fonctionnement humide selon l'une des revendications précédentes, **caractérisée en ce que** le boîtier (13) recevant la platine principale (20) et le carter (12) recevant le stator (6) forment chacun une unité de construction apte à être montée de manière indépendante de la gaine (8).

7. Pompe centrifuge à fonctionnement humide selon l'une des revendications précédentes, **caractérisée en ce qu'**une barrière thermique est disposée dans l'espace entre le carter de pompe (2) et le boîtier (13) recevant la platine principale (20).

8. Pompe centrifuge à fonctionnement humide selon l'une des revendications précédentes, **caractérisée en ce que** la paroi (31) orientée vers le carter de pompe (2), qui reçoit la platine principale (20) du carter (13) est reliée de façon thermiquement conductrice à des composants thermogènes de l'électronique de moteur ou est traversée par un répartiteur de chaleur raccordé auxdits composants, et **en ce que** des ouvertures latérales de boîtier (32) sont prévues, pour engendrer un flux de convection le long de cette paroi (31) ou le long du répartiteur de chaleur.

9. Pompe centrifuge à fonctionnement humide selon l'une des revendications précédentes, **caractérisée en ce que** des composants électriques et électroniques (22) de grande hauteur sont disposés dans la zone de la platine principale (20) qui dépasse radialement au moins la tête d'enroulements du stator (6).

10. Pompe centrifuge à fonctionnement humide selon l'une des revendications précédentes, **caractérisée en ce que** des composants thermogènes de l'électronique de moteur sont disposés sur le côté de la platine principale (20) orienté vers la pompe, et **en ce qu'**ils sont reliés de préférence de façon thermiquement conductrice à un cache axial (11) du carter de pompe (2).

11. Pompe centrifuge à fonctionnement humide selon l'une des revendications précédentes, **caractérisée en ce que** des composants thermogènes de l'électronique de moteur sont disposés sur le côté de la platine principale (20) opposé par rapport à la pompe, et **en ce qu'**ils sont reliés de préférence de façon thermiquement conductrice à la surface du carter de moteur (14).

12. Pompe centrifuge à fonctionnement humide selon l'une des revendications précédentes, **caractérisée en ce que** la platine principale comprend dans la zone dans laquelle elle dépasse radialement du stator (6), sur le côté opposé par rapport à la pompe, des bornes électriques pour un élément d'affichage électronique (16), pour un module supplémentaire, pour un commutateur (17) et/ou pour le raccordement au réseau électrique (18).

13. Pompe centrifuge à fonctionnement humide selon l'une des revendications précédentes, **caractérisée en ce que** le carter de pompe (2) présente sur son côté orienté vers le moteur des contours extérieurs sensiblement rectangulaires, de préférence carrés, et **en ce que** le carter de moteur (16) est formé de façon congruente par rapport à ceux-ci.

14. Pompe centrifuge à fonctionnement humide selon l'une des revendications précédentes, **caractérisée en ce que** le carter de moteur (14) reçoit le stator (6) et l'électronique de moteur et forme une unité adaptée pour être montée de façon indépendante de la gaine (8).

15. Pompe centrifuge à fonctionnement humide selon l'une des revendications précédentes, **caractérisée en ce que** le carter de moteur (14) est formé entièrement ou partiellement en étant intégré dans une masse de scellement ou par la masse de scellement.

16. Pompe centrifuge à fonctionnement humide selon l'une des revendications précédentes, **caractérisée en ce que** la platine principale (20) comprend sur le côté orienté vers la pompe un contacte de mise à la terre, de préférence une broche de mise à la terre (34), qui est raccordé de façon conductrice au carter de pompe (2) et/ou au cache (11) du carter de pompe (2).

17. Pompe centrifuge à fonctionnement humide selon l'une des revendications précédentes, **caractérisée en ce qu'**une partie d'une connexion électrique enfichable pour le raccordement au réseau électrique est prévue dans la partie du carter de moteur (14) dépassant radialement le stator (6), la connexion enfichable étant disposée parallèlement à l'axe de turbine (21).

18. Pompe centrifuge à fonctionnement humide selon l'une des revendications précédentes, **caractérisée en ce que** sont prévus des moyens de fixation (24, 25, 30) coopérant avec la gaine (8), qui immobilisent le carter de moteur (14) au carter de pompe (2) au moins dans la direction axiale du rotor (7).

19. Pompe centrifuge à fonctionnement humide selon l'une des revendications précédentes, **caractérisée en ce qu'**une rainure périphérique (23) est prévue proche de l'extrémité de la gaine (8) du côté moteur, dans laquelle rainure s'engage au moins un bec de blocage (30) d'une plaque d'extrémité (24), le carter de moteur (14) étant immobilisé sur le carter de pompe (2) à l'aide de cette plaque (24).

20. Pompe centrifuge à fonctionnement humide selon l'une des revendications précédentes, **caractérisée en ce qu'**un dispositif anti-rotation (26) est prévu entre le carter de pompe (2) et le carter de moteur (14), de préférence par des moyens de complémentarité de forme entre le carter de moteur et le carter de pompe.
